# FASCICULE DE BREVET EUROPEEN

(11) **EP 1 220 082 B1**
(45) Date de publication et mention de la délivrance du brevet: **03.08.2005**
(21) Numéro de dépôt: 01204955.7
(22) Date de dépôt: 18.12.2001
(51) Int. Cl.: G06F 1/16, H04M 1/02

(54) **Appareil électronique comportant un dispositif d'affichage formant bouton de commande**
Elektronisches Gerät mit einer bedienungstastebildendenen Anzeigevorrichtung
Electronic device having a display screen forming a control button

(30) Priorité: 26.12.2000 FR 0017047
(43) Date de publication de la demande: 03.07.2002
(73) Titulaire: Cellon France SAS, 72100 Le Mans (FR)
(72) Inventeur: Flegeo, Arnaud, c/o Société Civile S.P.I.D., 75008 Paris (FR)
(74) Mandataire: Kohn, Philippe

(56) Documents cités:
- EP-A- 0 901 229
- GB-A- 2 299 302
- US-A- 4 543 563

## Description

L'invention concerne un appareil électronique qui comporte un dispositif d'affichage.

L'invention concerne plus particulièrement un appareil électronique qui comporte un boîtier dont une paroi comporte une fenêtre qui est traversée par un dispositif d'affichage.

Généralement, le dispositif d'affichage traverse la face avant ou principale de l'appareil électronique.

L'appareil électronique comporte aussi des commutateurs qui sont actionnés par des touches ou boutons-poussoirs et qui permettent de modifier l'état électrique d'un circuit de commande, notamment du circuit de commande du dispositif d'affichage. Les touches forment ainsi un clavier qui, généralement, traverse lui aussi la face principale de l'appareil électronique, ou en partie une face latérale.

La modification de l'état électrique d'un circuit de commande permet de commander une fonction de l'appareil électronique.

Le dispositif d'affichage fournit des informations alphanumériques qui peuvent être très variées, telles que des chiffres ou des lettres pour un téléphone ou un "organiseur". Le dispositif d'affichage peut aussi présenter des pictogrammes, des dessins ou des images lorsque le dispositif est, par exemple, un jeu électronique.

De façon à satisfaire les besoins et les envies des consommateurs, les appareils électroniques présentent de plus en plus de fonctions dans des volumes de plus en plus petits.

Par conséquent, les appareils électroniques doivent comporter suffisamment de dispositifs de commande pour permettent de contrôler toutes les fonctions de l'appareil.

Exemples de tels appareils sont décrits dans les publications suivantes : EP-A-901229, US-A-4543563 et G-B-A-2299302. L'augmentation du nombre de fonctions provoque ainsi une augmentation du coût et/ou de l'encombrement des dispositifs de commande.

À titre d'exemple, il est fréquent que les dispositifs d'affichage des téléphones mobiles comportent des caractères qui peuvent être des chiffres et/ou des lettres, répartis sur plusieurs lignes et plusieurs colonnes d'affichage. Il est alors nécessaire de pouvoir déplacer rapidement et facilement un curseur dans l'écran de façon à pouvoir le positionner sur chacun des caractères.

Le déplacement du curseur est aussi appelé "navigation" du curseur dans le dispositif d'affichage.

Les jeux électroniques nécessitent aussi le déplacement d'un curseur sur le dispositif d'affichage.

Ces déplacements sont obtenus par des dispositifs de commande spécifiques qui peuvent être constitués d'une ou plusieurs touches qui coopèrent avec des commutateurs électriques associés et qui modifient le circuit de commande du dispositif d'affichage pour piloter le déplacement du curseur.

Il est connu d'associer une touche à chaque sens de déplacement selon l'une des directions sur le dispositif d'affichage.

La touche peut être une touche supplémentaire, ce qui aboutit à une augmentation des dimensions du clavier et par conséquent de l'appareil électronique, ce qui va à l'encontre de la miniaturisation.

Une autre solution propose d'utiliser une touche déjà existante qui permet de commander une première fonction, une telle touche étant appelée touche à double fonction. Cependant, il est nécessaire de prévoir l'actionnement d'une autre touche de façon à effectuer la permutation entre les deux fonctions commandées par la touche à double fonction. Ceci nécessite de toujours savoir quelle est la fonction qui va être réalisée lors de l'appui sur la touche à double fonction. Cette solution diminue la simplicité d'utilisation de l'appareil électronique.

Le dispositif de commande spécifique peut aussi consister en une molette de navigation. Le déplacement du curseur est alors proportionnel à la rotation de la molette.

Lorsque l'appareil électronique est un téléphone mobile, par exemple de type GSM, la molette est avantageusement agencée dans une paroi latérale du téléphone de façon à faciliter son utilisation. Cependant, les molettes de navigation nécessitent un capteur spécifique qui permet de fournir au circuit de commande du dispositif d'affichage une information représentative de la rotation de la molette. De plus, il est nécessaire de prévoir une ouverture supplémentaire dans le boîtier de façon que la molette soit accessible depuis l'extérieur.

Le capteur spécifique, ainsi que la réalisation de l'ouverture supplémentaire, augmentent le coût de fabrication de l'appareil électronique concerné. De plus, l'utilisation d'une molette ne permet généralement le déplacement du curseur que selon une direction, dans les deux sens.

Le dispositif de commande spécifique peut encore consister en un organe de pointage aussi appelé "track-ball".

Un tel organe de pointage consiste en un levier ou en une bille ou boule. Le curseur se déplace sur l'écran en fonction du déplacement ou de la rotation, ainsi que des sens et de la direction du déplacement ou de la rotation, appliqués au levier ou à la bille respectivement.

De façon similaire à l'utilisation d'une molette, l'organe de pointage nécessite un capteur spécifique onéreux.

Dans le but de fournir un appareil électronique pouvant réaliser, à moindre coût et dans un encombrement minimal, un maximum de fonctions pouvant être commandées de façon simple et rapide par l'utilisateur, l'invention propose un appareil électronique qui comporte un boîtier dont une paroi comporte une fenêtre traversée par un dispositif d'affichage tel qu'un dispositif d'affichage à cristaux liquides, et du type dont le boîtier reçoit au moins un premier commutateur électrique qui permet de modifier l'état électrique d'un circuit de commande associé, tel qu'un circuit de commande du dispositif d'affichage, remarquable en ce que le dispositif d'affichage comporte au moins une partie externe de commande sur laquelle un utilisateur peut appliquer un effort de commande et une partie interne d'actionnement dont une face d'actionnement est susceptible de coopérer avec un organe de déclenchement du commutateur électrique associé, et en ce que le dispositif d'affichage est monté mobile, par rapport au boîtier entre une position de repos et une position d'actionnement dans laquelle la partie d'actionnement coopère avec l'organe de déclenchement du commutateur.

Selon d'autres caractéristiques de l'invention :
- la position de repos du dispositif d'affichage par rapport au boîtier est déterminée, vers l'extérieur du boîtier, par une butée mécanique ;
- l'appareil électronique comporte des moyens élastiques qui rappellent en permanence le dispositif d'affichage vers sa position de repos ;
- les moyens élastiques appartiennent au commutateur ;
- l'appareil électronique comporte au moins une touche mobile pour actionner un second commutateur associé ;
- le premier et le deuxième commutateurs sont portés par un élément de support commun ;
- l'élément de support commun s'étend sensiblement dans un plan, la partie d'actionnement du dispositif d'affichage ainsi que la touche sont, chacune, montées mobiles selon une direction sensiblement perpendiculaire audit plan ;
- le dispositif d'affichage comporte quatre parties périphériques de commande qui sont réparties dans le dispositif d'affichage selon quatre orientations différentes par rapport à une zone centrale du dispositif, et dont chacune est susceptible de coopérer avec un organe de déclenchement d'un commutateur électrique associé ;
- les parties externes de commande sont localisées et réalisées de façon que l'utilisateur les repère facilement de façon intuitive ;
- l'appareil électronique comporte des moyens d'étanchéité situés à l'intervalle de la fenêtre et du dispositif d'affichage de façon à empêcher les pollutions telles que des poussières de pénétrer dans le boîtier ;
- les moyens d'étanchéité sont constitués d'un film souple qui est fixé sur les faces d'une paroi du dispositif d'affichage et de la paroi du boîtier de part et d'autre de l'intervalle entre la fenêtre et le dispositif d'affichage.

D'autres caractéristiques et avantages de l'invention, le tout donné à titre d'exemples non limitatifs, apparaîtront à la lecture de la description détaillée qui suit pour la compréhension de laquelle on se reportera aux figures annexées parmi lesquelles :
- la figure 1 est une vue en perspective d'un appareil électronique réalisé selon l'invention ;
- la figure 2 est une vue en section longitudinale de l'appareil électronique, selon la ligne 2-2 représentée à la figure 1 ;
- la figure 3 est une vue à grande échelle du détail D3 représenté à la figure 2 ;
- la figure 4 est une vue à grande échelle du détail D4 représenté à la figure 2.

Dans la suite de la description, une orientation supérieure, inférieure sera utilisée conformément à l'orientation de haut en bas des figures.

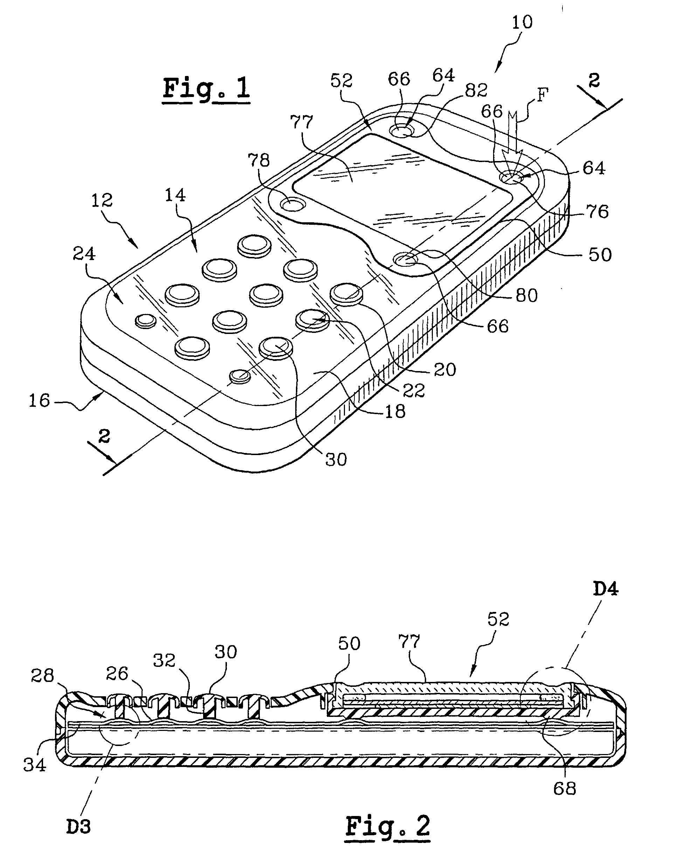

La figure 1 représente un appareil électronique 10 qui est ici, à titre d'exemple, un téléphone mobile de type GSM.

Le téléphone 10 comporte un boîtier 12 constitué d'une coque supérieure 14 et d'une coque inférieure 16.

La face supérieure 18 de la coque supérieure 14 comporte des orifices 20 qui permettent le passage de touches 22 d'un clavier 24 du téléphone 10. Les touches 22 sont mobiles verticalement entre une position de repos et une position d'actionnement dans laquelle chacune coopère avec un organe de déclenchement 26 d'un commutateur 28 électrique associé (figure 2).

Le clavier 24 est ici constitué de douze touches 22 qui sont réparties en quatre séries horizontales de trois touches chacune.

Les touches 22 sont principalement constituées d'une partie supérieure 30 de commande sur laquelle un doigt de l'utilisateur peut appliquer un effort de commande. La partie 30 forme le dos de la touche correspondante.

Comme représenté figure 2, les touches 22 sont aussi constituées d'une partie inférieure rigide d'actionnement 32 qui est susceptible de coopérer avec l'organe de déclenchement 26 du commutateur 28 électrique associé. La partie inférieure rigide d'actionnement 32 est réalisée sous la forme d'une tige centrale qui s'étend verticalement depuis la face inférieure du dos de la partie 30 supérieure de la touche 22 correspondante, jusqu'à la paroi supérieure de l'organe de déclenchement 26 du commutateur 28 électrique associé, qui est par exemple un dôme déformable élastiquement.

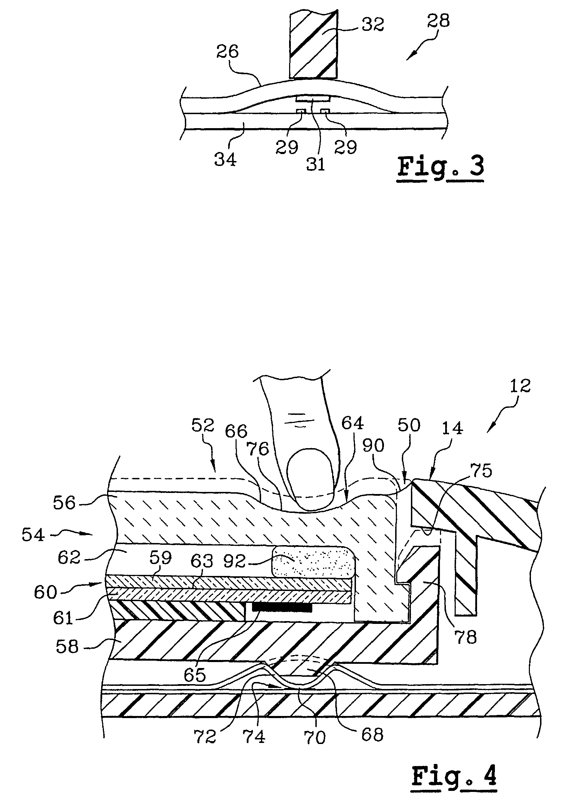

Chaque commutateur 28 électrique est principalement constitué de deux pistes métalliques 29, représentées en détail à la figure 3, appartenant à un circuit électrique de commande associé et qui ne sont pas reliées électriquement entre elles lorsque la touche 22 associée est en position de repos.

Lorsque la touche 22 est en position d'actionnement, la partie inférieure 32 déforme le dôme 26 de façon qu'une partie 31 conductrice électriquement de sa face inférieure vienne en contact avec les deux pistes métalliques, modifiant ainsi l'état électrique du circuit électrique de commande associé de façon à commander une fonction de l'appareil électronique 10.

La fonction peut par exemple consister à prendre la ligne téléphonique, à composer un chiffre du numéro à joindre, à déplacer un curseur dans un dispositif d'affichage 52 ou à valider une opération réalisée précédemment.

En général, les parties 30 supérieures et les parties 32 inférieures sont réalisées en une seule pièce par injection d'un matériau rigide, tel que du plastique.

Les pistes métalliques des commutateurs 28 sont fixées, par exemple par métallisation, sur un élément de support commun 34 qui s'étend dans un plan sensiblement horizontal et qui peut être un film de plastique. Les pistes appartiennent par exemple à la face supérieure d'une plaque à circuits imprimés.

La coque supérieure 14 du boîtier 12 de l'appareil électronique 10 comporte aussi une fenêtre 50 qui est traversée par un dispositif d'affichage 52, tel qu'un dispositif d'affichage à cristaux liquides, qui est ici sensiblement rectangulaire.

Selon l'invention, le dispositif d'affichage 52 est monté mobile, par rapport au boîtier 12 entre une position de repos, représentée à la figure 2 ainsi qu'en trait interrompu à la figure 4, et une position d'actionnement, représentée en trait fort à la figure 4.

Le dispositif d'affichage 52 comporte principalement un caisson 54 qui est constitué d'une partie supérieure 56 en matériau transparent, tel que du plastique, qui est fixée par emboîtement élastique sur une partie inférieure 58 de support.

Un écran d'affichage 60 est agencé dans une cavité 62 délimitée par les parties supérieure 56 et inférieure 58 du caisson 54.

L'écran 60 est principalement constitué de deux plaques de verre 59 et 61 entre lesquelles s'étend une fine couche 63 de cristal liquide.

La couche 63 de cristal liquide est reliée électriquement par des électrodes 65 à un dispositif de commande qui est relié à des circuits électriques de commande associés à des commutateurs électriques.

Le fonctionnement de l'écran 60 de type connu ne sera pas décrit plus amplement.

Conformément à l'invention, le dispositif d'affichage 52 comporte quatre parties périphériques 64 de commande qui sont réparties sensiblement aux quatre coins du dispositif d'affichage 52, de façon à être réparties dans le dispositif d'affichage 52 selon quatre orientations différentes par rapport à une zone centrale 77 du dispositif 52.

Les quatre parties périphériques 64 de commande sont référencées 76, 78, 80, 82 à la figure 1.

Chaque partie périphérique d'angle 64 comporte une partie externe de commande 66 sur laquelle l'utilisateur peut appliquer un effort de commande, schématisé par la flèche F représentée à la figure 1, et une partie interne d'actionnement 68 (figure 4) dont une face inférieure d'actionnement 70 est susceptible de coopérer avec un organe de déclenchement 72 d'un commutateur électrique 74 associé pour, par exemple, commander une fonction de l'appareil électronique 10.

Les parties externes de commande 66 doivent être localisées et réalisées de façon que l'utilisateur les repère facilement de façon intuitive.

Les parties externes de commande 66 ont ici une forme de cuvette de façon à épouser la forme du bout du doigt de l'utilisateur.

Selon des variantes de réalisation les parties externes de commande 66 peuvent consister en un bossage, une zone colorée, ou une zone sur laquelle est réalisé un dessin ou un écrit.

Chaque partie externe de commande 66 peut aussi être une combinaison de ces solutions, c'est-à-dire par exemple avoir une forme de cuvette sur laquelle est réalisé un dessin en relief dont la couleur peut être différente de celle de la partie externe et qui représente avantageusement la fonction réalisée lors de l'application d'un effort de commande.

Le repérage aisé des parties 66 peut ainsi résulter d'une combinaison tactile et visuelle.

Les organes de déclenchement 72 et les commutateurs électriques 74 associés aux parties périphériques 64 sont avantageusement identiques ou similaires aux organes de déclenchement 26 et aux commutateurs 28 des touches 22 du clavier 24.

L'invention propose aussi que les pistes métalliques des commutateurs 74 appartiennent à l'élément de support commun 34. Ainsi, tous les commutateurs 28 et 74 de l'appareil électronique sont rassemblés sur l'élément de support commun 34, ce qui facilite leur manipulation ainsi que leur positionnement et leur assemblage dans le boîtier 10.

De plus, le surcoût résultant de la réalisation des quatre commutateurs 74 sur l'élément de support commun 34 est très faible.

Les parties internes d'actionnement 68 qui sont similaires aux parties inférieures 32 consistent en des bossages qui sont réalisés sur la face inférieure de la partie inférieure 58 du caisson 54.

Conformément à la figure 4, la position de repos du dispositif d'affichage 52 par rapport au boîtier 12 est déterminée, vers l'extérieur du boîtier 10, par une butée mécanique 75 formée par la coque supérieure 14.

En effet, les dimensions de la partie inférieure 58 sont supérieures aux dimensions de la fenêtre 50. Ainsi, les bords libres 78 du dispositif d'affichage 52 sont bloqués par la butée 75 constituée par la périphérie de la fenêtre 50.

L'appareil électronique 10 comporte des moyens élastiques qui rappellent en permanence le dispositif d'affichage 52 vers sa position de repos. Les moyens élastiques de rappel sont ici constitués par les organes de déclenchement 72 des commutateurs 74 associés aux parties périphériques 64.

Ainsi, le lorsque l'utilisateur applique un effort de commande, par exemple sur une première 76 partie externe 64, le dispositif d'affichage 52 a un mouvement de basculement par rapport aux bords libres qui lui sont opposés selon un axe passant par les troisième 80 et quatrième 82 parties externes 64 voisines de la première 76.

La partie interne d'actionnement 68 de la première 76 partie externe se déplace verticalement et déforme l'organe de déclenchement 72 du commutateur 74 associé, à l'encontre de son élasticité propre, jusqu'à ce qu'il modifie l'état du circuit de commande.

Les parties internes d'actionnement 68 de la troisième 82 et de la quatrième 84 parties externes 64 se déplacent aussi verticalement. Cependant, le déplacement est insuffisant pour que les organes de déclenchement 72 des commutateurs 74 associés modifient l'état du circuit de commande.

Il est aussi possible d'appliquer un effort sur une autre partie du dispositif d'affichage 52. Selon la localisation du point d'application de l'effort, plusieurs organes de déclenchement 72 peuvent coopérer concomitamment avec les commutateurs 74 associés.

Dans ce cas, le changement d'état concomitant des circuits électriques de commande associés peut commander une ou des fonctions différentes de celles qui sont commandées lors du changement d'état non concomitant de ces mêmes circuits électriques de commande.

La répartition des parties externes de commande 66 aux quatre angles du dispositif d'affichage 52 est particulièrement bien adaptée pour commander la navigation du curseur. En effet, l'appui sur chacune des parties externes de commande 66 permet le déplacement du curseur selon un sens d'une direction. Ce sens correspond alors avantageusement à la position de la partie externe de commande 66 correspondante, par rapport au centre 77 du dispositif d'affichage 52.

Ainsi, la navigation du curseur devient intuitive, puisque le curseur se déplace en direction de la partie externe de commande 66 sur laquelle l'utilisateur exerce un effort.

Selon une variante, le dispositif d'affichage 52 peut comporter une cinquième partie interne d'actionnement qui est avantageusement située au centre 77 de la partie inférieure de support 58. Le commutateur associé peut ainsi permettre de modifier l'état électrique d'un circuit qui permet la validation d'une opération précédente, telle que la saisie d'un numéro de téléphone.

L'appareil électronique 10 selon l'invention permet ainsi de façon simple, économique et peu encombrante de commander des fonctions supplémentaires par rapport à un appareil équivalent présentant un clavier et un dispositif d'affichage classique, c'est-à-dire fixe par rapport au boîtier.

Conformément à la figure 4, l'appareil électronique 10 comporte un film souple 90, formant moyens d'étanchéité, qui permet d'empêcher les pollutions telles que des poussières de pénétrer dans le boîtier 12.

Le film souple 90 est fixé, par exemple par collage ou thermocollage, sur la face externe de la coque supérieure 14 du boîtier 12 à proximité des bords de la fenêtre 50 et recouvre la paroi supérieure de la partie supérieure 56 du caisson 54. La souplesse du film 90 lui permet de se déformer pour qu'il puisse ainsi suivre les mouvements du caisson 54 par rapport au boîtier 12.

Un cordon d'étanchéité 92, qui peut être une substance expansée telle que de la mousse, est agencé entre la partie supérieure 56 du caisson 54 et l'écran à cristaux liquides 60 pour isoler partiellement l'écran 60 des vibrations transmises par la partie 56, et pour empêcher les poussières ou les saletés de s'immiscer entre l'écran 60 et la partie supérieure 56 du caisson 54.

## Revendications

1. Appareil électronique (10) comportant un boîtier (12) dont une paroi comporte une fenêtre (50) traversée par un dispositif d'affichage (52) tel qu'un dispositif d'affichage (52) à cristaux liquides, dont le boîtier (12) reçoit au moins un premier commutateur électrique (74) qui permet de modifier l'état électrique d'un circuit de commande associé, tel qu'un circuit de commande du dispositif d'affichage (52) et un organe de déclenchement du commutateur électrique associé, le dispositif d'affichage (52) comportant au moins une partie externe de commande (66) sur laquelle un utilisateur peut appliquer un effort de commande et une partie interne d'actionnement (68) dont une face d'actionnement (70) est susceptible de coopérer avec l'organe de déclenchement (72) du commutateur électrique (74) associé, et le dispositif d'affichage (52) étant monté mobile, par rapport au boîtier (12) entre une position de repos et une position d'actionnement dans laquelle la partie d'actionnement (68) coopère avec l'organe de déclenchement (72) du commutateur (74).

2. Appareil électronique (10) selon la revendication 1, **caractérisé en ce que** la position de repos du dispositif d'affichage (52) par rapport au boîtier (12) est déterminée, vers l'extérieur du boîtier (12), par une butée mécanique (75).

3. Appareil électronique (10) selon l'une des revendications 1 ou 2, **caractérisé en ce qu'**il comporte des moyens élastiques qui rappellent en permanence le dispositif d'affichage (52) vers sa position de repos.

4. Appareil électronique (10) selon la revendication 3, **caractérisé en ce que** les moyens élastiques appartiennent au premier commutateur (74).

5. Appareil électronique (10) selon l'une quelconque des revendications précédentes, **caractérisé en ce qu'**il comporte au moins une touche (22) mobile pour actionner un second commutateur (28) associé.

6. Appareil électronique (10) selon la revendication 5, **caractérisé en ce que** le premier et le deuxième commutateurs (74, 28) sont portés par un élément de support commun (34).

7. Appareil électronique (10) selon la revendication 6, **caractérisé en ce que** l'élément de support commun (34) s'étend sensiblement dans un plan, et **en ce que** la partie d'actionnement (66) du dispositif d'affichage (52) ainsi que la touche (22) sont, chacune, montées mobiles selon une direction sensiblement perpendiculaire audit plan.

8. Appareil électronique (10) selon l'une quelconque des revendications précédentes, **caractérisé en ce que** le dispositif d'affichage (52) comporte quatre parties périphériques d'actionnement (66) qui sont réparties dans le dispositif d'affichage (52) selon quatre orientations différentes par rapport à une zone centrale du dispositif (52), et dont chacune est susceptible de coopérer avec un organe de déclenchement (72) d'un commutateur électrique (74) associé.

9. Appareil électronique (10) selon l'une quelconque des revendications précédentes, **caractérisé en ce** les parties externes de commande (66) sont localisées et réalisées de façon qu'un utilisateur les repère facilement.

10. Appareil électronique (10) selon l'une quelconque des revendications précédentes, **caractérisé en ce qu'**il comporte des moyens d'étanchéité situés à l'intervalle de la fenêtre (50) et du dispositif d'affichage (52) de façon à empêcher les pollutions telles que des poussières de pénétrer dans le boîtier (12).

11. Appareil électronique (10) selon la revendication précédente **caractérisé en ce que** les moyens d'étanchéité sont un film souple (90) qui est fixé sur les faces d'une paroi du dispositif d'affichage (52) et d'une paroi du boîtier (12) de part et d'autre de l'intervalle entre la fenêtre (50) et le dispositif d'affichage (52).

## Patentansprüche

1. Elektronisches Gerät (10), welches ein Gehäuse (12) mit einer Wand mit einem Fenster (50) aufweist, welches von einer Anzeigevorrichtung (52), beispielsweise einer LCD-Anzeige (52), durchquert ist, wobei das Gehäuse (12) wenigstens einen ersten elektrischen Umschalter (74), der es ermöglicht, den elektrischen Zustand eines zugehörigen Steuerkreises, wie beispielsweise eines Steuerkreises der Anzeigevorrichtung (52), zu ändern, und ein Mittel zum Auslösen des zugehörigen elektrischen Umschalters aufnimmt, wobei die Anzeigevorrichtung (52) wenigstens einen äußeren Betätigungsbereich (66), auf welchen der Benutzer eine Betätigungskraft ausüben kann, und einen inneren Betätigungsbereich (68) aufweist, von dem eine Betätigungsfläche (70) mit dem Mittel zum Auslösen (72) des zugehörigen elektrischen Umschalters (74) zusammenwirken kann, und wobei die Anzeigevorrichtung (52) in Bezug auf das Gehäuse (12) zwischen einer Ruheposition und einer Betätigungsposition beweglich eingebaut ist, wobei der Betätigungsbereich (68) in der Betätigungsposition mit dem Mittel zum Auslösen (72) des Umschalters (74) zusammenwirkt.

2. Elektronisches Gerät (10) gemäß Anspruch 1, **dadurch gekennzeichnet, dass** die Ruheposition der Anzeigevorrichtung (52) in Bezug auf das Gehäuse (12) zur Außenseite des Gehäuses (12) hin durch einen mechanischen Anschlag (75) festgelegt ist.

3. Elektronisches Gerät (10) gemäß einem der Ansprüche 1 oder 2, **dadurch gekennzeichnet, dass** es elastische Mittel aufweist, welche die Anzeigevorrichtung (52) ständig in Richtung Ruheposition beaufschlagen.

4. Elektronisches Gerät (10) gemäß Anspruch 3, **dadurch gekennzeichnet, dass** die elastischen Mittel zu dem ersten Umschalter (74) gehören.

5. Elektronisches Gerät (10) gemäß einem der vorausgegangenen Ansprüche, **dadurch gekennzeichnet, dass** es wenigstens eine bewegliche Taste (22) aufweist, mit der ein zugehöriger zweiter Umschalter (28) betätigt werden kann.

6. Elektronisches Gerät (10) gemäß Anspruch 5, **dadurch gekennzeichnet, dass** der erste und der zweite Umschalter (74, 28) auf einem gemeinsamen Träger (34) angeordnet sind.

7. Elektronisches Gerät (10) gemäß Anspruch 6, **dadurch gekennzeichnet, dass** sich der gemeinsame Träger (34) im wesentlichen in einer Ebene erstreckt, und dass der Betätigungsbereich (66) der Anzeigevorrichtung (52) sowie die Taste (22) jeweils in einer zu dieser Ebene im wesentlichen senkrechten Richtung beweglich angebracht sind.

8. Elektronisches Gerät (10) gemäß einem der vorausgegangenen Ansprüche, **dadurch gekennzeichnet, dass** die Anzeigevorrichtung (52) vier auf dem Umfang angeordnete Betätigungsbereiche (66) aufweist, die in der Anzeigevorrichtung (52) entsprechend vier unterschiedlichen Richtungen in Bezug auf einen mittigen Bereich der Vorrichtung (52) verteilt sind, und von denen jedes mit dem Mittel zum Auslösen (72) eines verbundenen elektrischen Umschalters (74) zusammenzuwirken kann.

9. Elektronisches Gerät (10) gemäß einem der vorausgegangenen Ansprüche, **dadurch gekennzeichnet, dass** die äußeren Betätigungsbereiche (66) so angeordnet und ausgeführt sind, dass ein Benutzer diese leicht ausfindig macht.

10. Elektronisches Gerät (10) gemäß einem der vorausgegangenen Ansprüche, **dadurch gekennzeichnet, dass** es Mittel zum Abdichten aufweist, die im Zwischenraum zwischen Fenster (50) und der Anzeigevorrichtung (52) angeordnet sind, um zu verhindern, dass Verunreinigungen wie beispielsweise Staub in das Gehäuse (12) eintreten.

11. Elektronisches Gerät (10) gemäß dem vorausgegangenen Anspruch, **dadurch gekennzeichnet, dass** die Mittel zum Abdichten aus einem weichen Film (90) bestehen, der an den Flächen einer Wand der Anzeigevorrichtung (52) und einer Wand des Gehäuses (12) auf beiden Seiten des Zwischenraums zwischen dem Fenster (50) und der Anzeigevorrichtung (52) befestigt ist.

## Claims

1. An electronic apparatus (10) comprising a housing (12) of which one wall comprises a window (50) passed through by a display device (52) such as a liquid crystal display device, and of the type in which the housing (12) accommodates at least a first electric switch (74) which permits to modify the electric state of an associated control circuit, such as a control circuit of the display device (52) and a trigger element of the associated electric switch, the display device (52) comprising at least an external control part (66) on which a user can apply a control force, and an internal activation part (68) of which an activation surface (70) may co-operate with the trigger element (72) of the associated electric switch (74) and the display device (52) being mounted movable relative to the housing (12) between a rest position and an activation position in which the activation part (68) co-operates with the trigger element (72) of the switch (74).

2. An electronic apparatus (10) as claimed in claim 1, **characterized in that** the rest position of the display device (52) relative to the housing (12) is determined, towards the exterior of the housing (12), by a mechanical stop (75).

3. An electronic apparatus (10) as claimed in one of the claims 1 or 2, **characterized in that** it comprises elastic means which permanently bring back the display device (52) to its position of rest.

4. An electronic apparatus (10) as claimed in claim 3, **characterized in that** the elastic means belong to the first switch (74).

5. An electronic apparatus (10) as claimed in anyone of the preceding claims, **characterized in that** it comprises at least one movable key (22) for activating a second associated switch (28).

6. An electronic apparatus (10) as claimed in claim 5, **characterized in that** the first and second switches (74, 28) are carried by a common support element (34).

7. An electronic apparatus (10) as claimed in claim 6, **characterized in that** the common support element (34) stretches out substantially in one plane and **in that** the activation part (68) of the display device (52) as well as the key (22) are each mounted movable along one direction substantially perpendicular to said plane.

8. An electronic apparatus (10) as claimed in anyone of the preceding claims, **characterized in that** the display device (52) comprises four peripheral activation parts (66) which are spread in the display device (52) in four different directions relative to a central area of the device (52) and of which each one may co-operate with a trigger element (72) of an associated electric switch (74).

9. An electronic apparatus (10) as claimed in anyone of the preceding claims, **characterized in that** the external control parts (66) are located and realized for a user to spot them easily.

10. An electronic apparatus (10) as claimed in anyone of the preceding claims, **characterized in that** it comprises sealing means situated in the space between the window (50) and the display device (52) so as to avoid pollution such as dust penetrating the housing (12).

11. An electronic apparatus (10) as claimed in the preceding claim, **characterized in that** the sealing means are a flexible film (90) which is fixed on the faces of a wall of the display device (52) and a wall of the housing (12) on either side of the space between the window (50) and the display device (52).
